(19) **Europäisches Patentamt**
**European Patent Office**
**Office européen des brevets**

(11) **EP 1 958 928 A1**

(12) **EUROPEAN PATENT APPLICATION**

(43) Date of publication:
**20.08.2008 Bulletin 2008/34**

(21) Application number: **08151485.3**

(22) Date of filing: **15.02.2008**

(51) Int Cl.:
*C07B 59/00* (2006.01)    *C08F 8/12* (2006.01)
*C08F 8/04* (2006.01)    *C08F 38/00* (2006.01)
*C08F 38/04* (2006.01)    *G21H 1/06* (2006.01)

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **16.02.2007 US 676233**
**16.02.2007 US 676223**

(71) Applicants:
• **William Marsh Rice University**
**Houston, TX 77005 (US)**
• **Betabatt, Inc.**
**Houston, TX 77077 (US)**

(72) Inventors:
• **Gadeken, Larry L.**
**Houston, TX 77077 (US)**
• **Engel, Paul S.**
**Houston, TX 77005 (US)**
• **Laverdure, Kenneth S.**
**Lake Jackson, TX 77566 (US)**

(74) Representative: **Harrison Goddard Foote**
**Belgrave Hall**
**Belgrave Street**
**Leeds**
**LS2 8DD (GB)**

(54) **Synthesis of radioactive materials and compositions of same**

(57) The present invention relates generally to synthesis of radioactive material, such as a tritiated polymer, and an apparatus for generating electrical current from the nuclear decay process of a radioactive material. In one embodiment, the invention relates to an energy cell (e.g., a battery) for generating electrical current derived from particle emissions occurring within a radioactive material (such as a tritiated polymer) on pore walls of a porous semiconductor. The radioactive material may be introduced into the energy cell by a wetting process.

EP 1 958 928 A1

## Description

### GOVERNMENT INTERESTS

The present invention was made with support from the National Science Foundation Small Business Innovation Research Phase II Grant No. 0450338.

### TECHNICAL FIELD

The present invention relates generally to synthesis of radioactive material, such as a tritiated polymer, and an apparatus for generating electrical current from the nuclear decay process of a radioactive material. In one embodiment, the invention relates to an energy cell (*e.g.*, a battery) for generating electrical current derived from particle emissions occurring within a radioactive material such as a tritiated polymer) on pore walls of a porous semiconductor. The radioactive material may be introduced into the energy cell by a wetting process.

### BACKGROUND

Electrical current directly derived from a nuclear decay process is frequently referred to as an "alpha-voltaic" or "beta-voltaic" effect, depending on whether the charged particle emitted by a particular nucleus is an alpha particle or a beta particle, respectively. Previously, a major drawback when attempting to use energy derived from a nuclear decay series to power devices in remote locations has been an inefficiency of the energy conversion process.

Tritium-containing polymers are described in U.S. Patent Application Publication No. 20050217782 to Agostini, U.S. Patent Application Publication No. 20040053708 to Hebert; U.S. Patent Nos. 5,100,968 and 4,889,660 to Jensen et al.; U.S. Patent No. 4,020,003 to Steinberg et al.; U.S. Patent No. 5,124,610 to Conley et al.; and U.S. Patent No. 6,418,177 to Stauffer et al. A description of efforts to exploit the nuclear decay process of a radioactive material is found in "Final Scientific/Technical Report; A Nuclear Microbattery for MEMS Devices; U.S. Department of Energy Award No. DE-FG07-99ID13781," published by James Blanchard *et al.* of the University of Wisconsin-Madison. Other references to nuclear batteries include U.S. Patent No. 6,479,920 to Lal et al.; U.S. Patent No. 6,118,204 to Brown; U.S. Patent No. 5,859,484 to Mannik et al.; U.S. Patent No. 5,606,213 to Kherani et al.; and U.S. Patent Nos. 6,774,531 and 6,949,865 to Gadeken. All of the foregoing are incorporated herein by reference.

### SUMMARY

This invention relates to radioactive material including carbon and tritium and a beta-voltaic cell that includes the same. In general, in one aspect, the invention features a process including selecting an organic material and tritiating the organic material to yield a tritiated material. The tritated material has a ratio of tritium atoms to carbon atoms of at least about 1:1. The step of tritiating of the material includes addition and/or substitution methods.

Implementations of the invention can include one or more of the following features. The organic material can be a polymer (with the resulting tritiated material being a tritiated polymer). The polymer can be a poly (vinylacetylene), such as TMS poly(vinylacetylene). The amount of tritium in the tritiated material can be at least about 20 wt%. The tritiated polymer can be $[C_4H_3T_5]_n$. The tritiated polymer can be tritiated poly(1-ethylethylene). The tritiated polymer can be saturated. The step of tritiating the polymer can include catalytic tritium addition. The polymer can have a carbon-carbon triple bond (or a carbon-carbon double bond) in at least one monomer unit of the polymer, and the step of tritiating the polymer can further include addition of the tritium in the form of tritium gas to the carbon-carbon triple (or double) bond. The step of tritiating the polymer can include $T_2O$ hydrolysis. The ratio of tritium atoms to carbon atoms in the tritiated polymer can be at least about 1.25:1, or more specifically at least about 1.5:1, or even more specifically at least about 2:1. The polymer can be synthesized from two or more compounds, one of which includes vinyl bromide. The synthesizing of the polymer can include reacting vinyl bromide with trimethylsilylacetylene ((TMS) acetylene) and, optionally, the vinyl bromide can be tritiated before the synthesizing of the polymer. The polymer can include some tritium atoms before further tritiating the polymer utilizing addition and/or substitution methods.

In another aspect, the invention features a process including reacting vinyl bromide with trimethylsilylacetylene ((TMS) acetylene) in the presence of a palladium catalyst to form TMS protected vinylacetylene; polymerizing the TMS protected vinylacetylene to generate TMS PVacet; hydrolyzing the TMS PVacet with $T_2O$ to form PVacet-T; and adding tritium to the PVacet-T to yield tritiated poly(1-ethylethylene).

In another aspect, the invention features a saturated polymer comprising carbon and tritium. The saturated polymer has a ratio of tritium atoms to carbon atoms of at least about 1:1.

Implementations of the invention can include one or more of the following features. The saturated polymer can be tritiated poly(1-ethylethylene). The saturated polymer can have at least one monomer unit that includes at least 5 tritium atoms.

In another aspect, the invention features a method of making a beta-voltaic cell that includes tritiating an organic material to yield a tritiated material and at least partially wetting at least one pore of a porous semiconductor with a liquid including the tritiated material. The tritated material has a ratio of tritium atoms to carbon atoms of at least about 1:1. The tritiating of the organic material includes an addition and/or substitution method.

The pore has disposed within it a first portion of a junction region.

Implementations of the invention can include one or more of the following features. The organic material can be a polymer (with the resulting tritiated material being a tritiated polymer). The step of wetting may include melt-wetting and/or solution-wetting, to form a film on a solid surface (for instance, pore walls of a porous semiconductor). The film may be a mesoscopic film. The porous semiconductor can include silicon, which can be macroporous silicon. The opening of the pore can have a diameter between about 1 nm and about 500 $\mu$m. The porous semiconductor can include doped silicon. The tritiated polymer can include tritiated poly(1-ethylethylene). The porous semiconductor can be heated and/or cooled during the process. During the wetting step, a layer of thickness of about 30 nm to about 50 nm can be formed on the walls of at least the pore in the porous semiconductor.

In another aspect, the invention features an apparatus for generating electrical current from a nuclear decay process of a radioactive material. The apparatus includes a porous semiconductor wafer. At least one pore of the porous semiconductor wafer is at least partially coated with the radioactive material. The radioactive material includes a tritiated material having a ratio of tritium atoms to carbon atoms of at least about 1:1. The pore of the porous semiconductor wafer includes a first portion of a junction region.

Implementations of the invention can include one or more of the following features. The organic material can be a polymer (with the resulting tritiated material being a tritiated polymer). At least one of the porous semiconductor wafers can include silicon, which can be macroporous silicon. The first portion of the junction region can be disposed at a declination angle of greater than about 55° relative to a second portion of said junction. The tritiated polymer can include tritiated poly(1-ethylethylene). The tritiated polymer can include a saturated polymer. The pore can have an aspect ratio of at least about 20:1.

In further embodiments, features from specific embodiments may be combined with features from other embodiments. For example, features from one embodiment may be combined with features from any of the other embodiments. In further embodiments, additional features may be added to the specific embodiments described herein.

## BRIEF DESCRIPTION OF THE DRAWINGS

Advantages of the present invention will become apparent to those skilled in the art with the benefit of the following detailed description and upon reference to the accompanying drawings in which:

FIG. 1 depicts a process for the preparation of poly(vinylacetylene) known in the prior art.

FIG. 2 depicts the preparation of tritiated poly (1-ethylethylene) from TMS poly(vinylacetylene).

FIG. 3 is a sectional view of an embodiment of a process of wetting pores in a porous semiconductor with radioactive material.

FIG. 4 is a schematic representation of an embodiment of a beta-voltaic cell.

FIG. 5A is a schematic representation of another embodiment of a beta-voltaic cell.

FIG. 5B is a schematic representation of another embodiment of a beta-voltaic cell.

FIG. 6A is a sectional view of an embodiment of a pore array in a porous semiconductor.

FIG. 6B is a sectional view of another embodiment of a pore array in a porous semiconductor.

While the invention may be susceptible to various modifications and alternative forms, specific embodiments thereof are shown by way of example in the drawings and will herein be described in detail. The drawings may not be to scale. It should be understood, however, that the drawings and detailed description thereto are not intended to limit the invention to the particular form disclosed, but to the contrary, the intention is to cover all modifications, equivalents, and alternatives falling within the spirit and scope of the present invention as defined by the appended claims.

## DETAILED DESCRIPTION

The following terms shall have the definitions given below when used in either lower case or with capitalizations in this specification:

"Addition" is defined as a chemical reaction in which two or more molecules, one of which includes at least one carbon-carbon double bond and/or at least one carbon-carbon triple bond, combine to form a larger molecule.

"Exchange" is defined as a chemical reaction in which atoms of the same element in two different molecules or in two different positions in the same molecule exchange places. Exchange reactions include reactions in which one isotope of an element is replaced by a different isotope of the same element.

"Liquid polymer" refers to any substance in the liquid state that includes a polymer. Liquid polymers include, but are not limited to, a polymer melt or a solubilized polymer.

"Polymer" and "polymeric material" refer to a substance including one or more of various types of polymers (*e.g.*, block copolymer, graft copolymer, star polymer, random copolymer, *etc.*)

"Saturated polymer" refers to a polymer containing no multiple (*i.e.*, double or triple) bonds.

"Substitution" is generally defined as a chemical reaction in which one element or group is replaced by a different element or group as a result of a chemical reaction.

"Tritiating" a substance (*e.g.*, a carbon-containing molecule, monomer, polymer, *etc.*) refers to incorporating tritium into the substance through the formation of one or more carbon-tritium covalent bonds.

The present invention relates to the preparation of radioactive material for beta-voltaic cells, which includes the preparation of a radioactive material, such as tritiated organic material or tritiated polymer, with a high energy density through an efficient process that achieves high utilization of the radioactive material and produces low amounts of contaminated waste products. With a radioactive source (*e.g.*, tritium) incorporated into an organic structure (for instance, a polymer), leaking or leaching of radioactive material into the environment can be inhibited.

Organic materials suitable for tritiation include, but are not limited to, monomers, oligomers, and polymers. In some embodiments, monomers may be tritiated, and the tritiated monomers may be used to form tritiated polymers. The tritiated polymers may be further tritiated. In other embodiments, a non-radioactive polymer may be tritiated. The tritiated polymer may then be further tritiated. Examples of organic material that may be tritiated include, for instance, vinyl bromide and poly(vinylacetylene). Vinyl bromide and poly(vinylacetylene) are used herein as examples of organic materials suitable for tritiation. Other organic materials known in the art may also be tritiated to form radioactive material suitable for generation of electrical current from beta-voltaic cells.

Mavinkurve, et al., "High molecular weight poly (4-trimethylsilyl-1-buten-3-yne)," European Polymer Journal, 1997 33(5):719-723, describes synthesis of poly-(vinylacetylene) selective polymerization of 4-trimethyl-1-buten-3-yne through the vinyl group, followed by cleavage of the protective trimethylsilyl group. At low temperatures, the monomer undergoes self-initiated polymerization leading to an ultra-high molecular weight polymer. Matnishyan et al., "Characteristic Features of the Polymerisation of Acetylene and Its Derivatives," Russ. Chem. Rev., 1983, 52(8):751-756, describes methods of preparation of high-molecular-weight polymers.

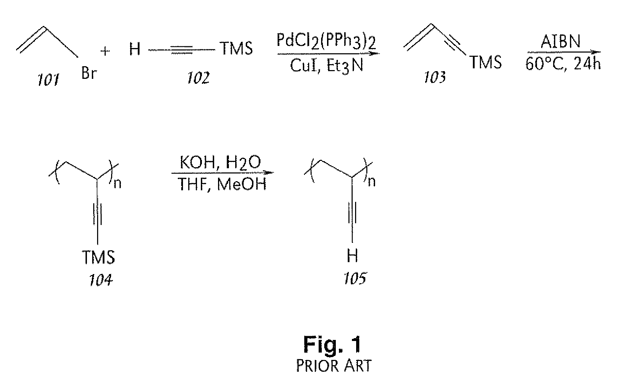

Work by Helms et al. ("Dendronized Linear Polymers via 'Click Chemistry'" J. Am. Chem. Soc. 2004, 126, 15020-15021, which is incorporated by reference herein) describes a solution phase procedure to produce poly(vinylacetylene). The synthesis of poly(vinylacetylene) (PVacet) described by Helms *et al.* is depicted in FIG. 1. As shown in FIG. 1, vinyl bromide **101** is reacted with trimethylsilylacetylene ((TMS) acetylene) **102** in the presence of a palladium catalyst (PdCl$_2$(PPh$_3$)$_2$), copper iodide, and triethylamine to form TMS protected vinylacetylene (TMS-1-buten-3-yne) **103** in a Sonogashira reaction. Bulk polymerization initiated with azoisobutyronitrile (AIBN) at 60°C generates TMS PVacet **104**. Hydrolysis of the TMS moiety in an excess of KOH and MeOH yields PVacet **105**.

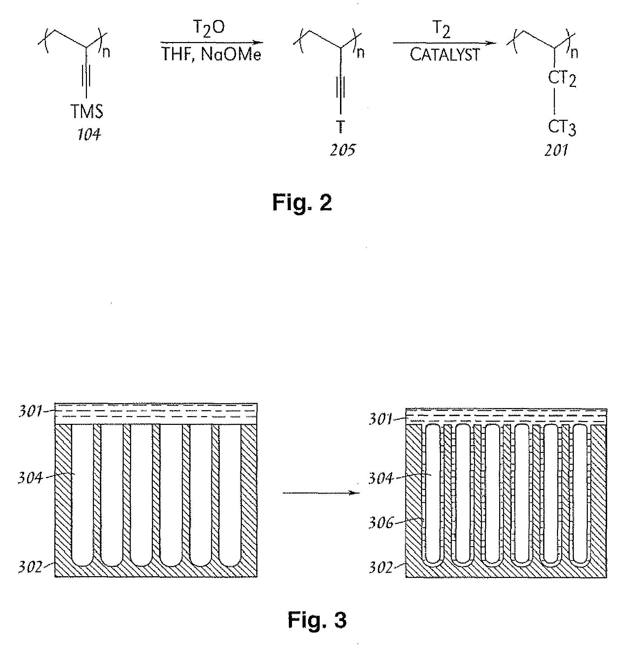

For complete tritiation, however, exchangeable hydrogens must be substantially absent from the reaction mixture. Departing from FIG. 1, a tritium atom may be substituted for the TMS moiety by T$_2$O hydrolysis of the TMS moiety in TMS PVacet **104** in the presence of NaOMe and THF to form PVacet-T **205,** as depicted in FIG. 2. In an example, 218 mg (4.03 mmol) anhydrous NaOMe and 88.7 mg (4.03 mmol) of T$_2$O are added to 500 mg of polytrimethylsilylvinylacetylene (4.03 mmol of TMS groups) dissolved in 20 mL THF. After stirring at 50°C for 48 hours, the solvent mixture is removed under vacuum to yield PVacet-T **205**. In some embodiments, an excess of NaOMe and T$_2$O may be used.

Catalytic tritium addition of four tritium atoms to each carbon-carbon triple bond of PVacet-T **205** yields tritiated poly(1-ethylethylene) [C$_4$H$_3$T$_5$]$_n$ **201**. In some embodiments, catalytic tritium addition may be achieved with T$_2$ in the presence of Wilkinson's chlorotri(triphenylphosphine)rhodium. In other embodiments the catalyst may be metallocene/ butyllithium, as described by Tsiang, et al., "Hydrogenation of polystyrene-b-polybutadiene-b-polystyrene block copolymers using a metallocene/n-butyllithium catalyst: the role of n-butyllithium," "J. Appl. Polym. Sci. 1999, 72(14):1807-1815. In still further embodiments, heterogeneous catalysts including, but not limited to, Pd/C or Pt/C may be used at elevated pressures and/or temperatures.

Tritiated poly(1-ethylethylene) [C$_4$H$_3$T$_5$]$_n$ **201** may be completely saturated. The fully saturated, tritiated polymer includes about 23 wt% tritium, with a ratio of tritium atoms to carbon atoms in each monomer unit of 1.25:1, and a molecular weight ranging from about 20,000 to about 200,000. Radioactivity of [C$_4$H$_3$T$_5$]$_n$ generally will be in a range from about 1,000 Ci/g to about 5,000 Ci/g.

The synthesis depicted in FIG. 2 involves introduction of tritium at the final stages of the synthesis (*e.g.*, tritiating a polymer rather than precursor monomer units), thereby limiting handling of tritium-containing compounds. The substitution and addition reactions depicted in FIG. 2 to form PVacet-T **205** and [C$_4$H$_3$T$_5$]$_n$ **201,** respectively, allow efficient synthesis while limiting the production of contaminated (*e.g.*, radioactive) waste. The scheme in FIG. 2 is an example of a method to produce a saturated, tritiated polymer with substitution and addition reactions to cleanly and efficiently incorporate or introduce tritium into a polymer. The scheme in FIG. 2 does not include an exchange reaction between protium and tritium.

In alternative embodiments of the invention, the processes shown in FIGS. 1 and 2 can be modified such that the pendant group in each monomer unit of the radioactive polymer is a longer carbon chain. For instance, when the pendant group in each monomer unit is a butyl group (instead of an ethyl group, as in poly(1-ethylethylene)), the resulting radioactive polymer is of the form [C$_6$H$_3$T$_9$]$_n$, with a ratio of tritium atoms to carbon atoms in each monomer unit of 1.5:1. The ratio will approach about 2:1 as the pendant group becomes longer.

In another alternative embodiment of the invention, the tritium:carbon ratio may be increased by deprotecting TMS poly(vinylacetylene) with fluoride in the pres-

ence of $C_2T_5I$, resulting in monomeric units with the formula $C_6H_3T_5$ before addition of $T_2$ across the triple bond. Full tritation would then yield $C_6H_3T_9$, with a tritium:carbon ratio of 1.5:1.

In still another alternative embodiment of the invention, the processes shown in FIGS. 1 and 2 can be modified to begin with tritiated vinyl bromide ($C_2T_3Br$) rather than vinyl bromide ($C_2H_3Br$) **101.** As such, after polymerization, substitution, and addition, the resultant tritiated poly(1-ethylethylene) is $[C_4T_8]_n$, with a ratio of tritium atoms to carbon atoms in each monomer unit of 2:1.

A radioactive material in a liquid state may be used to wet one or more pores of a porous semiconductor to provide a source of beta particles for a beta-voltaic cell. As used herein, "wetting" is generally defined as a process by which an interface between a solid and a gas is replaced by an interface between the same solid and a liquid. Steinhart et al. describe wetting of porous templates to form nanotubes in "Nanotubes a la Carte: Wetting of Porous Templates" CHEMPHYSCHEM 2003, 4, 1171-1176, which is incorporated by reference herein.

Wetting behavior is described by the spreading parameter S:

$$S = \gamma_{sv} - \gamma_{sl} - \gamma_{lv},$$

in which $\gamma_{sv}$ is the solid-vapor interfacial tension, $\gamma_{sl}$ is the solid-liquid interfacial tension, and $\gamma_{lv}$ is the liquid-vapor interfacial tension. When (a) the solid is a porous semiconductor, (b) the liquid is a liquid form of a radioactive material (such as a radioactive polymer), and (c) the vapor includes air or any combination of gases including inert gases (*e.g.*, nitrogen, argon), adhesive forces between the polymer liquid and the semiconductor exceed the cohesive forces with the polymer liquid, thereby allowing the polymer liquid to spread on the porous semiconductor.

Wetting may involve the formation of a precursor film as the liquid polymer spreads on the porous substrate. A microscopic precursor film may form near an edge of a macroscopic liquid polymer droplet. The precursor film may spread on the order of millimeters, with a thickness ranging of a few tens of nanometers.

FIG. 3 is a sectional view of an embodiment of the process of wetting pores in a porous semiconductor (*e.g.*, a silicon wafer) with liquid polymer. As depicted in FIG. 3, liquid polymer **301** may be in contact with a porous surface of porous semiconductor **302**. Liquid polymer **301** may have a lower surface energy than porous semiconductor **302,** allowing the liquid polymer to at least partially wet the surface of the porous semiconductor, including walls of pores **304** in the porous semiconductor. Cohesive forces necessary to completely fill pores **304** of porous semiconductor **302** may be lacking, such that the pores may be wetted, but not substantially filled, with liquid polymer **301,** as depicted in FIG. 3. Pore walls in porous semiconductor **302** may be at least partially covered with layer **306**. In some embodiments, layer **306** may be a film (*e.g.*, a mesoscopic film).

As used herein, "mesoscopic" film refers to a film with a thickness characterized by properties intermediate between the properties of bulk matter and individual atoms or molecules. As used herein, "coat" or "coating" generally refers to a layer or film, or forming such layer or film, on a pore wall of a porous semiconductor. The coat or coating may be in a liquid or solid state. The coat, layer, or film may have a thickness ranging from about 1 nm to about 100 nm. As used herein, "wetting" generally refers to forming a layer of liquid on a solid surface, including pore walls of a porous solid. In some embodiments, wetting of pore walls of a porous semiconductor by a liquid radioactive material (such as a radioactive polymer) may occur over a period of time of 1-100 seconds.

Pores of a porous semiconductor may be wet with a polymer liquid by methods including, but not limited to, solution-wetting and melt-wetting. Solution-wetting may include contacting a polymer melt or a liquid containing one or more polymers and one or more additional components with a porous surface of a semiconductor. For instance, poly(1-ethylethylene) may be dissolved in any suitable solvent known in the art including, but not limited to, acetone, tetrahydrofuran, chloroform, toluene, or a mixture thereof to form a liquid radioactive polymer. A liquid polymer applied to (*e.g,* brought in contact with a porous surface of) a porous semiconductor may be homogeneous. The morphology of a polymeric coating of a pore wall may be selectively controlled through processes including, but not limited to, thermal quenching or solvent evaporation to induce phase separation along with phase ripening.

Melt-wetting may include placing or pressing polymer powders or pellets on a porous surface of a semiconductor that has been heated to a temperature that exceeds the glass transition temperature of an amorphous polymer or the melting point of a partially crystalline polymer. In some embodiments, wetting of pore walls of a porous semiconductor by a liquid polymer may occur over a period of time of 1-100 seconds. Cooling of the polymer melt (*e.g.,* cooling the porous semiconductor wetted by the polymer melt) may result in a polymeric layer coupled to one or more pore walls. As used herein, "coupled" generally refers to joined or linked together, with or without an intervening substance or material. A polymeric layer may be removably or permanently coupled to one or more pore walls. The method of wetting the pore walls, including heating and/or cooling the porous semiconductor or substrate, may be chosen to achieve a desired thickness and/or morphology of the resulting polymeric layer coupled to the pore walls.

Sun, et al., "A Three-Dimensional Porous Silicon p-n Diode for Betavoltaics and Photovoltaics," Adv. Mat. 2005, 17, 1230-1233 (which is incorporated by reference herein), describes a three-dimensional diode constructed on porous silicon, which consists of a network of pores formed by electrochemical anodization of silicon substrates. Porous silicon is classified according to pore size as microporous (≤2 nm), mesoporous (20-50 nm), or macroporous (>50 nm). As used herein, "pore size" and "pore diameter" generally refer to a diameter of an opening of the pore (*e.g.*, a "throat" of the pore).

In some embodiments, appropriate materials having pore sizes within any of the aforementioned size ranges (*e.g.*, nanometer-scale structures, such as carbon nanotubes) may be used. In other embodiments, a quantum wire of radioactive atoms strung in a polymer chain may be inserted into a pore with a slightly larger diameter than the chain.

In some embodiments of the invention, a silicon formation is used in which an individual pore diameter is between about 1 nm and about 500 $\mu$m. In other embodiments, pores having a diameter between about 1 nm and about 100 $\mu$m are formed. In still other embodiments, pores having a diameter of between about 1 nm and about 70 $\mu$m are formed.

In some embodiments, the pore depth extends through the entire thickness of a semiconductor wafer. In such embodiments, the junction regions of the pores are interconnected by a variety of means that will occur to those of skill in the art (*e.g.*, exterior wire-bond connection, metalization deposits on the wafer, and/or conductive layers within the wafer itself).

In a further embodiment, channels are formed in the wafer, wherein a width of the channels is on the order of a micron. For instance, in embodiments of the invention, channels having a diameter between about 1 nm and about 500 $\mu$m may be formed. In other embodiments, channels having a diameter between about 1 $\mu$m and about 100 $\mu$m may be formed. In some embodiments, channels having a diameter of about 70 $\mu$m may be formed. The channels may be formed as a series or array of channels.

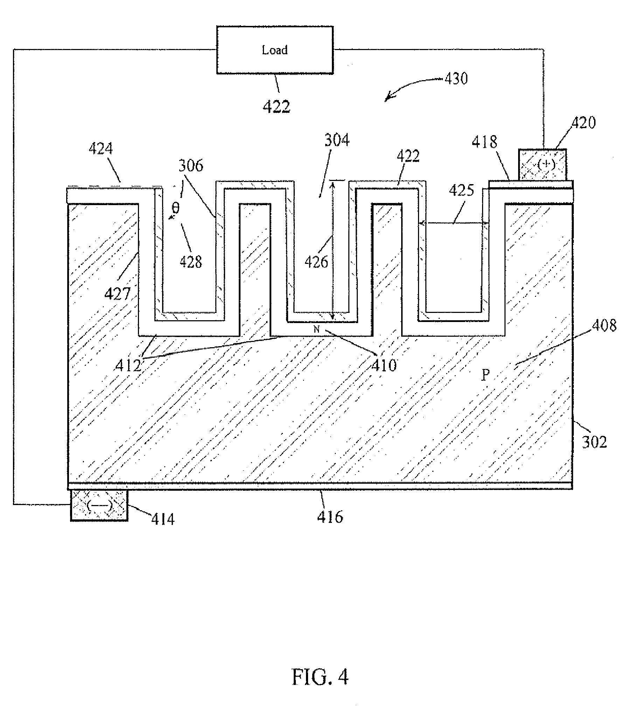

Referring now to FIG. 4, an embodiment of diode structure **430** is seen in which porous semiconductor **302** has been doped to provide p-type region **408**, n-type region **410**, and junction region **412**. In some embodiments, porous semiconductor **302** may include silicon. First contact **414** connects p-type region **408** to a first side of load **423** via low-resistivity contact region **416** (e.g., a metal, for instance, aluminum). Second contact **420** connects n-type region **410** via low-resistivity contact surface region **418** (e.g., a metal deposit, for instance, gold) thereby permitting a current transport path for charges liberated by energetic decay electron energy absorption in n-type region **410** to reach second contact **420**, such that n-type region **410** is in electrical communication with another side of load **423**.

Radioactive material **422** is disposed in layer **306** coupled to pores **304**. Each decay event in radioactive material **422** generates an energetic beta particle that may enter n-type region **410** which has an electric field across junction **412** caused by the contact potential between p-type region **408** and n-type region **410**. In this embodiment, the emitted beta particle enters n-type region **410** and creates positive (holes) and negative (electrons) charges within n-type region **410** that separate under the influence of the electric field in junction **412**. One charged species migrates towards junction region **412** and then to low-resistivity contact region **416**, while an oppositely charged species migrates toward a contact surface region (*e.g.*, **416** or **418**). In this manner, a current flow through load **423** is induced via first contact **414** and second contact **420**.

The maximum travel distance of the most energetic tritium beta particle in silicon is about 4.33 $\mu$m; and, in an embodiment employing a silicon wafer and tritiated organic material (tritiated polymer), junction region **412** may be created near a boundary of p-type region **408** and n-type region **410** at a depth just past 4.33 $\mu$m. Disposition of the junction region at a depth greater than the maximum travel distance of the beta particle provides a nearly 100% chance that all of the charge generated when a beta particle travels through n-type region **410** will be collected, and therefore contribute to the total generated current.

Pores **304**, in various embodiments, have diameter **425** of significantly less than the "mean free path" of the decay particle of the radioactive material disposed in the pore for the purpose of increasing the probability that a decay event will cause current to be generated. In further embodiments, pores **304** have length **426**, with a length-to-diameter aspect ratio of greater than about 20:1. In a still further embodiment, pores **304** have an aspect ratio of greater than about 30:1, again for the purpose of increasing the probability that a decay event will result in a particle entering the semiconductor and generating current. In still further embodiments (for instance, see FIG. 4), the walls of pores **304**, and consequently the exemplary junction region **427** of junction **412** formed between p-type region **408** and n-type region **410**, have a declination angle θ of greater than about 55° (measured relative to surface plane **424** of the semiconductor surface in which they are formed). In the embodiment illustrated in FIG. 4, for instance, the walls of pores **304**, and, thus, the exemplary junction regions **427**, have a declination angle θ **428** of about 90° measured relative to surface plane **424** of the semiconductor in which they are formed. When the radioactive material is disposed in a long, narrow volume in a semiconductor, there is a much greater probability that a beta particle produced by a decay event will enter junction region **412** and induce a current flow. Disposing the radioactive material in a manner such that a decay particle is produced a significant fraction of a mean free path or further from the nearest energy conversion function causes a much lower current density to result from any particular volume of a semiconductor.

It should be noted that the current of a particular device is related, at least in part, to the surface area of the junction region **412** available to collect electrons quickly after the decay event. The greater the area of junction region **412** provided in a particular volume of radioactive material, the greater the induced current. The voltage of a particular device depends, at least in part, on the voltage of junction region **412.** For silicon-material junction regions, that voltage is about 0.7 volts. For other junction regions, whether derived from different semiconductor materials (*e.g.*, germanium, gallium-arsenide, *etc.*) and/or other structural configurations (*e.g.*, plated metal disposed over selected portions of a semiconductor material), the voltage is different.

The diode structure **430** in FIG. 4 effectively parallels a number of pn-junctions, each formed in the pores **304** and to some extent over the surface of p-type region **408.** The structure of FIG. 4 would be fabricated over an area of p-type region **408,** creating a diode structure **430.** To configure a diode structure that generates more current or voltage than is possible with a single diode structure **430,** requires the parallel and/or series combinations of the diode structures **430.**

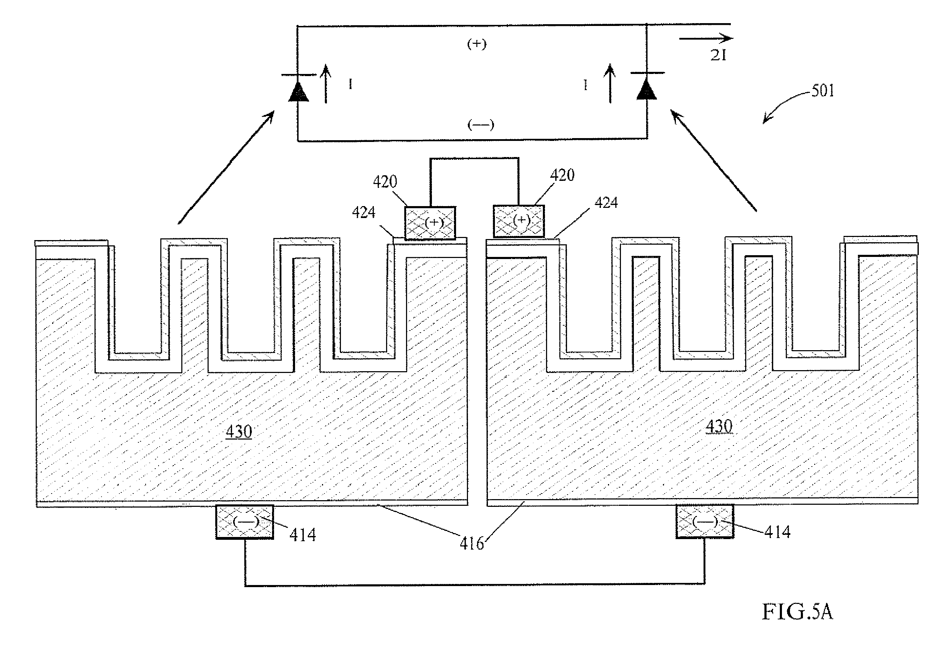

FIG. 5A depicts a sectional view of a parallel combination **501** of two diode structures **430** for generating substantially twice the current possible with a single diode structure **430.** The detail of the diode structures **430** are shown in FIG. 4 and are not repeated relative to FIG. 5A. Contacts **420** are coupled and connect to the n-type regions **410** via low resistivity contact region **418** to form the positive terminal of parallel combination **501.** Likewise, contacts **414** are coupled and connect to the p-type regions **408** via low resistivity contact region **416.** Other embodiments may electrically couple more than two diode structures **430** in parallel using various mechanical configurations to realize desired form factors.

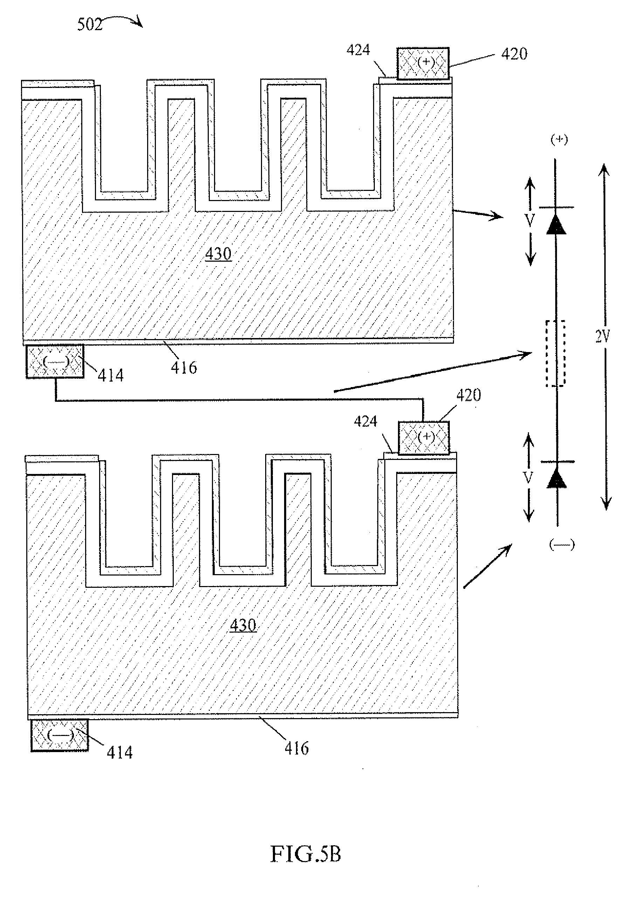

FIG. 5B depicts a sectional view of a series combination **502** of two diode structures **430** for generating substantially twice the voltage possible with a single diode structure **430.** The detail of the diode structures **430** are shown in FIG. 4 and are not repeated relative to FIG. 5B. In this embodiment, one contact **420** (coupled to the n-type region) in one diode structure **430** is coupled to one contact **414** (coupled to the p-type region) in the other diode structure **430.** The other contact **420** and the other contract **414** become the output terminals of the series combination **502.** Other embodiments may electrically couple more than two diode structures **430** in series using various mechanical configurations to realize desired form factors. While not shown, it is also possible to fabricate series/parallel combinations of the macro diode structures **430** to generate desired output voltages with desired current supply capabilities. These structures are considered within the scope of the present invention.

Diode structures **430** may include one or more (*e.g.*, a plurality of) etched channels or pores **304.** Channels or pores **304** may have doped junction regions **412** formed on the inner surfaces of said channels or pores. Radioactive material (radioactive polymer) 422 may be positioned (*e.g.*, confined) within diode structure **430.** For instance, layer **306** may be coupled to or deposited on one or more pore walls. In a further embodiment, radioactive material (radioactive polymer) **422** may include a non-radioactive material that may be converted into an appropriate radioactive species which thereafter decays when irradiated or otherwise excited by appropriate means.

In an embodiment, existing semiconductor fabrication methods are used to form porous silicon wafers having a plurality of etched pores or channels. *See,* for example, U.S. Patent No. 6,204,087 B1 to Parker et al.*,* U.S. Patent No. 5,529,950 to Hoenlein et al.; and U.S. Patent No. 5,997,713 to Beetz, Jr. et al.*,* all of which are incorporated herein by reference. Generally, a pore or channel pattern is deposited onto the wafer. Masking is performed using, for instance, photolithography and/or photo-masking techniques. Exposed portions of the wafer are etched (for instance, by exposure to a chemical solution, or gas plasma discharge) to remove areas of the wafer that were not protected during the masking stage.

In an embodiment of the present invention, inner surfaces of the etched pores are substantially curved in shape, for instance, cylindrical or conical. In an alternative embodiment, a series of very narrow channels having dimensions of a few microns are etched. In a still further embodiment, the etched pores and/or channels are formed in the wafer in positions that are substantially equidistant from one another. In further embodiments, pores and/or channels etched into the wafer are substantially the same shape, although, in other embodiments, some of the pores and/or channels have differing shapes.

The electrical properties of the etched area may then be altered by the addition of doping materials. In an embodiment of the invention, known doping methods are used to alter the electrical properties of the etched pores or channels. *See,* for example, "Deep Diffusion Doping of Macroporous Silicon," published by E. V. Astrova et al. of the A. F. Ioffe Physico-Technical Institute, Russian Academy of Sciences, St. Petersburg in December 1999 and March 2000, each of which is incorporated herein by reference. In some embodiments, the wafer is doped by applying atoms of other elements to the etched areas. In some embodiments, the added elements have at least one electron more than silicon and are called p-type (*e.g.*, boron). In further embodiments, the added elements have at least one electron less than silicon and are called n-type (*e.g.*, phosphorus).

According to a further embodiment, preparation of appropriate diode structures **430** (see FIG. 4) is performed using known doping techniques. In an embodiment of the invention, channels or pores **304** are etched (*e.g.*, in an array) into the bodies of diode structures **430,** and then doped to form a plurality of junction regions **412** on the inner wall surfaces of channels or pores **304.** Radioactive material (radioactive polymer) **422** may be introduced into channels or pores **304** through a process including, but not limited to, wetting with radioactive material. The diode structures **430** may be assembled as desired.

As mentioned *supra,* in some embodiments in which the radioactive material includes tritium, the emitted charged particles are beta electrons. Beta electrons have a relatively low penetrating power. Accordingly, in some embodiments, a housing may be formed from a thin sheet of metallic foil, which inhibits penetration of energetic particles emitted during the decay process. Thus, the possibility of radioactive energy escaping from the package is reduced. Use of tritiated material (for instance, tritiated polymer) reduces the need for precautions related to inadvertent release of tritium from the cell into environment.

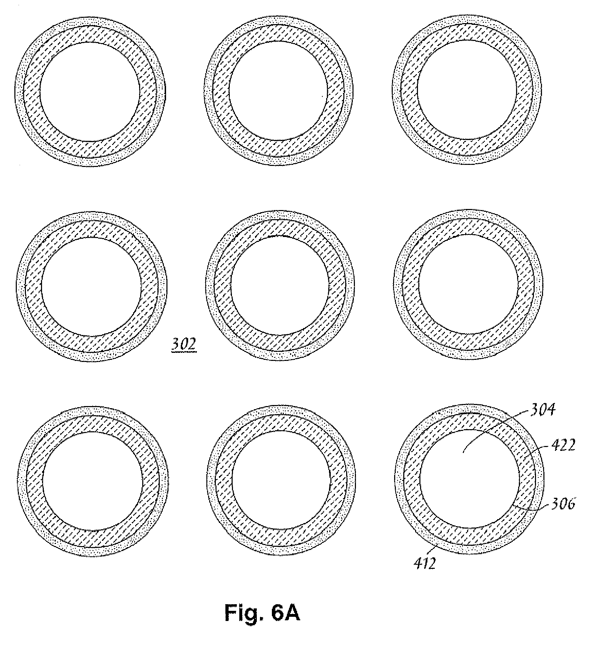

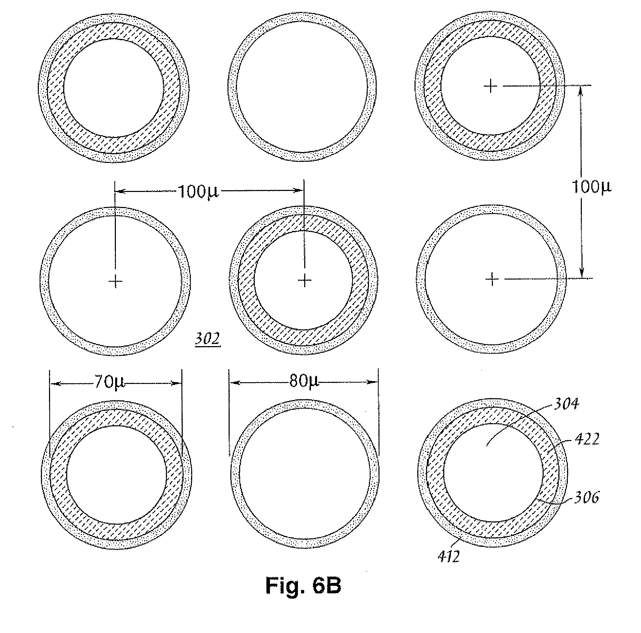

In further embodiments, FIG. 6A and FIG. 6B show a pore array formed within a diode structure for generating electrical current from the decay process of radioactive material (radioactive polymer). As seen, a 3x3 array of circles represents a sectional view of channels or pores **304** etched into porous semiconductor **302.** Porous semiconductor portion **302** may be, for instance, a silicon wafer. In some embodiments, pores **304** are cylindrical. In other embodiments, pores **304** may be other shapes including, but not limited to, ellipsoidal, hexagonal, and/or octagonal. Channels or pores **304** may be formed in regular and/or irregular arrays.

In the embodiment depicted in FIG. 6B, pores **304** are separated by about 100 $\mu$m in two directions (for instance, vertically and horizontally), and the pore diameter is about 70 $\mu$m. Junction region **412** formed by a p-n junction extends to about an 80 $\mu$m diameter. Layer **306** of radioactive material (radioactive polymer) **422** adheres to walls of one or more channels or pores **304.** In some embodiments, radioactive material (radioactive polymer) **422,** may be coupled to and/or removed from one or more selected channels or pores **304** randomly or with a given pattern, as shown in FIG. 6B. In some embodiments, layer **306** is of a thickness ranging from about 30 nm to about 50 nm.

In still further embodiments of the invention, other tritiated material (*e.g.*, a deuterated polymer, a tritiated polymer with a higher wt% of tritium) and/or other semiconductors (*e.g.*, germanium, silicon-germanium composite, or gallium arsenide) and/or other materials capable of forming appropriate junction regions can be employed. Other methods of forming pores and channels, and other pore and channel shapes and patterns, are used in still further embodiments. Actual dopants of the semiconductor, and related methods of doping, also vary in other embodiments, and are not limited to those recited above.

Beta-voltaic cells may be used advantageously for applications requiring low power and/or long life (*e.g.*, 12 years to over 100 years, depending on energy source). Beta-voltaic cells will operate in extreme environments, ranging from -100° C to +150° C and are shock tolerant. The size of a beta-voltaic cell may range from a button battery size to "D" cell size. Cells may be formed into arrays to increase battery size. Substantially all emissions in a beta-voltaic cell are captured within the three-dimensional diode matrix, substantially eliminating harmful radiation, leaching, contamination, and other negative environmental impact. Beta-voltaic cells are highly efficient and may be may be manufactured by semiconductor techniques known in the art.

Beta-voltaic cells may be used as stand-alone power sources or as trickle-chargers to increase the utility and practical life of chemical batteries. Applications for beta-voltaic cells include, but are not limited to: outer space (space vehicles, satellites, *etc.),* subsea (valves, actuators, sensors, controls, telemetry, *etc.*), subsurface (real-time measurements, four-dimensional seismic measurements, *etc.),* microelectronics (microelectronic mechanical systems, *etc.),* communications (RFID tags, implanted microcircuits, *etc.),* government and military (covert operations, sensors, detectors, *etc.*), medical (pacemakers, defibrillators, microstimulators, neurostimulators, cochlear implants, *etc.).*

In this patent, certain U.S. patents, U.S. patent applications, and other materials (e.g., articles) have been incorporated by reference. The text of such U.S. patents, U.S. patent applications, and other materials is, however, only incorporated by reference to the extent that no conflict exists between such text and the other statements and drawings set forth herein. In the event of such conflict, then any such conflicting text in such incorporated by reference U.S. patents, U.S. patent applications, and other materials is specifically not incorporated by reference in this patent.

Further modifications and alternative embodiments of various aspects of the invention will be apparent to those skilled in the art in view of this description. Accordingly, this description is to be construed as illustrative only and is for the purpose of teaching those skilled in the art the general manner of carrying out the invention. It is to be understood that the forms of the invention shown and described herein are to be taken as examples of embodiments. Elements and materials may be substituted for those illustrated and described herein, parts and processes may be reversed, and certain features of the invention may be utilized independently, all as would be apparent to one skilled in the art after having the benefit of this description of the invention. Changes may be made in the elements described herein without departing from the spirit and scope of the invention as described in the following claims.

The invention further includes the subject matter of the following paragraphs:

    1. A process comprising:

        (a) selecting an organic material; and
        (b) tritiating the organic material to yield a tritiated material, wherein

            (i) the tritiated material has a ratio of tritium atoms to carbon atoms of at least about 1:

1, and

(ii) the tritiating of the material in step (b) comprises a method selected from the group consisting of addition, substitution, and combinations thereof.

2. The process of paragraph 1, wherein the organic material comprises a polymer and the tritiated material comprises a tritiated polymer.

3. The process of paragraph 2, wherein the polymer comprises a poly(vinylacetylene).

4. The process of paragraph 2, wherein the polymer comprises TMS poly(vinylacetylene).

5. The process of paragraph 1, wherein the amount of tritium in the tritiated material is at least about 20 wt%.

6. The process of paragraph 2, wherein the amount of tritium in the tritiated polymer is at least about 20 wt%.

7. The process of paragraph 2, wherein the tritiated polymer is $[C_4H_3T_5]_n$.

8. The process of paragraph 2, wherein the tritiated polymer is tritiated poly(1-ethylethylene).

9. The process of paragraph 1, wherein the tritiated material is saturated.

10. The process of paragraph 1, wherein the step of tritiating the organic material comprises addition.

11. The process of paragraph 1, wherein the step of tritiating the organic material comprises catalytic tritium addition.

12. The process of paragraph 1, wherein the organic material has at least one carbon-carbon triple bond, and wherein the step of tritiating the organic material comprises addition of the tritium in the form of tritium gas to the carbon-carbon triple bond.

13. The process of paragraph 1, wherein the organic material has at least one carbon-carbon double bond, and wherein the step of tritiating the organic material comprises addition of the tritium in the form of tritium gas to the carbon-carbon double bond.

14. The process of paragraph 1, wherein the step of tritiating the organic material comprises substitution.

15. The process of paragraph 1, wherein the step of tritiating the organic material comprises $T_2O$ hydrolysis.

16. The process of paragraph 1, wherein the step of tritiating the organic material comprises addition and substitution.

17. The process of paragraph 1, wherein the ratio of tritium atoms to carbon atoms in the tritiated material is at least about 1.25:1.

18. The process of paragraph 1, wherein the ratio of tritium atoms to carbon atoms in the tritiated material is at least about 1.5:1.

19. The process of paragraph 1, wherein the ratio of tritium atoms to carbon atoms in the tritiated material is at least about 2:1.

20. The process of paragraph 2, further comprising synthesizing the polymer, wherein the polymer is synthesized from two or more compounds, wherein at least one of said compounds is vinyl bromide.

21. The process of paragraph 20, wherein the synthesizing of the polymer comprises reacting vinyl bromide with trimethylsilylacetylene ((TMS) acetylene).

22. The process of paragraph 20, wherein the vinyl bromide is tritiated before the synthesizing of the polymer.

23. The process of paragraph 1, wherein the selecting of the organic material in step (a) comprises selecting an organic material comprising tritium atoms and wherein the tritiating of the organic material in step (b) further tritiates the organic material selected in step (a).

24. A process comprising:

(a) reacting vinyl bromide with trimethylsilylacetylene ((TMS) acetylene) in the presence of a catalyst to form TMS protected vinylacetylene;
(b) polymerizing the TMS protected vinylacetylene to generate TMS PVacet;
(c) hydrolyzing the TMS Pvacet with $T_2O$ to form Pvacet-T; and
(d) adding tritium to the Pvacet-T to yield tritiated poly(1-ethylethylene).

25. A saturated polymer comprising carbon and tritium, wherein the saturated polymer has a ratio of tritium atoms to carbon atoms of at least about 1:1.

26. The saturated polymer of paragraph 25, wherein the ratio of tritium atoms to carbon atoms is at least about 1.25:1.

27. The saturated polymer of paragraph 20, wherein the ratio of tritium atoms to carbon atoms is at least about 1.5:1.

28. The saturated polymer of paragraph 25, wherein the ratio of tritium atoms to carbon atoms is at least about 2:1.

29. The saturated polymer of paragraph 25, wherein the saturated polymer is tritiated poly(1-ethylethylene).

30. The saturated polymer of paragraph 25, wherein at least one monomer unit of the saturated polymer comprises at least 5 tritium atoms.

31. A method of making a beta-voltaic cell comprising:

(a) tritiating an organic material to yield a tritiated material, wherein

(i) the tritated material has a ratio of tritium atoms to carbon atoms of at least about 1:1, and
(ii) the tritiating of the organic material in step (a) comprises a method selected from the group consisting of addition, substitution, and combinations thereof; and

(b) at least partially wetting at least one pore of a porous semiconductor with a liquid comprising the tritiated material, wherein a first portion of a junction region is disposed within said pore.

32. The process of paragraph 31, wherein the organic material is a polymer and the tritiated material is a tritiated polymer.

33. The method of paragraph 31, wherein the wetting in step (b) comprises melt-wetting.

34. The method of paragraph 31, wherein wetting in step (b) comprises solution-wetting.

35. The method of paragraph 31, wherein the wetting in step (b) comprises forming a film on the porous semiconductor.

36. The method of paragraph 31, wherein the porous semiconductor comprises silicon.

37. The method of paragraph 31, wherein the porous semiconductor comprises macroporous silicon.

38. The method of paragraph 31, wherein an opening of said pore has a diameter between about 1 nm and about 500 μm.

39. The method of paragraph 31, wherein the porous semiconductor comprises doped silicon.

40. The method of paragraph 32, wherein the tritiated polymer comprises tritiated poly(1-ethylethylene).

41. The method of paragraph 31, further comprising heating the porous semiconductor.

42. The method of paragraph 31, further comprising cooling the porous semiconductor.

43. The method of paragraph 31, wherein wetting comprises forming a layer of thickness of about 30 nm to about 50 nm on walls of at least said pore in the porous semiconductor.

44. An apparatus for generating electrical current from a nuclear decay process of a radioactive material, the apparatus comprising at least one porous semiconductor wafer, wherein

(a) at least one pore of said porous semiconductor wafer is at least partially coated with the radioactive material,
(b) the radioactive material comprises a tritiated material having a ratio of tritium atoms to carbon atoms of at least about 1:1, and
(c) said pore of said porous semiconductor wafer comprises a first portion of a junction region.

45. The apparatus of paragraph 44, wherein the tritiated material is a tritiated polymer.

46. The apparatus of paragraph 44, wherein at least one of the porous semiconductor wafers comprises silicon.

47. The apparatus of paragraph 44, wherein at least one of the porous semiconductor wafers comprises macroporous silicon.

48. The apparatus of paragraph 44, wherein the first portion of the junction region is disposed at a declination angle of greater than about 55° relative to a second portion of said junction.

49. The apparatus of paragraph 45, wherein the tritiated polymer comprises tritiated poly(1-ethylethylene).

50. The apparatus of paragraph 45, wherein the tritiated polymer comprises a saturated polymer.

51. The apparatus of paragraph 45, wherein the ratio of tritium atoms to carbon atoms in the tritiated polymer is at least about 1.25:1.

52. The apparatus of paragraph 45, wherein the ratio of tritium atoms to carbon atoms in the tritiated polymer is at least about 1.5:1.

53. The apparatus of paragraph 45, wherein the ratio of tritium atoms to carbon atoms in the tritiated polymer is at least about 2:1.

54. The apparatus of paragraph 45, wherein said pore has an aspect ratio of at least about 20:1.

**Claims**

1. A process comprising tritiating an organic material to yield a tritiated material, wherein

(i) the tritiated material has a ratio of tritium atoms to carbon atoms of at least about 1: 1, and
(ii) the tritiating of the material comprises a method selected from the group consisting of addition, substitution, and combinations thereof.

2. A process of claim 1, wherein the organic material comprises a polymer and the tritiated material comprises a tritiated polymer.

3. A process of claim 2, wherein the polymer comprises a poly(vinylacetylene).

4. A process of claim 2, wherein the polymer comprises TMS poly(vinylacetylene).

5. A process of any preceding claim, wherein the amount of tritium in the tritiated material is at least about 20 wt%.

6. A process of any preceding claim, wherein the organic material is unsaturated and the step of tritiating the organic material comprises addition.

7. A process of any of claims 1 to 5, wherein the organic material is unsaturated and the step of tritiating the organic material comprises catalytic tritium addition.

8. A process of claim 1 or claim 2, wherein the organic material has at least one carbon-carbon triple bond, and wherein the step of tritiating the organic material comprises addition of the tritium in the form of tritium gas to the carbon-carbon triple bond.

9. A process of claim 1 or claim 2, wherein the organic material has at least one carbon-carbon double bond, and wherein the step of tritiating the organic material comprises addition of the tritium in the form of tritium gas to the carbon-carbon double bond.

10. A process of any preceding claim, wherein the step of tritiating the organic material comprises substitution.

11. A process of claim 10, wherein the step of tritiating the organic material comprises $T_2O$ hydrolysis.

12. A process of claim 10 or claim 11, wherein the step of tritiating the organic material comprises addition and substitution.

13. A process of any preceding claim, wherein the tritiated material is saturated.

14. A process of any preceding claim, wherein the ratio of tritium atoms to carbon atoms in the tritiated material is at least about 1.25:1, optionally at least about 1.5:1, e.g. at least about 2:1.

15. A process of claim 2 wherein the tritiated polymer is tritiated poly(1-ethylethylene), and optionally is $[C_4H_3T_5]_n$.

16. A process of claim 2 or any of claims 3 to 15 when dependent on claim 2, further comprising synthesizing the polymer.

17. A process of claim 4, which further comprises synthesizing the TMS poly(vinylacetyline) by reacting vinyl bromide with trimethylsilylacetylene.

18. A process of claim 16, wherein the vinyl bromide is tritiated before the synthesizing of the polymer.

19. A process of any of claims 1 to 15, wherein the organic material comprises tritium atoms and wherein the tritiating of the organic material further tritiates the organic material.

20. A process of claim 1 comprising:

   (a) reacting vinyl bromide with trimethylsilylacetylene ((TMS) acetylene) in the presence of a catalyst to form TMS-protected vinylacetylene;
   (b) polymerizing the TMS protected vinylacetylene to generate TMS PVacet;
   (c) hydrolyzing the TMS PVacet with $T_2O$ to form PVacet-T; and
   (d) adding tritium to the PVacet-T to yield tritiated poly(1-ethylethylene).

21. A saturated polymer comprising carbon and tritium, wherein the saturated polymer has a ratio of tritium atoms to carbon atoms of at least about 1:1.

22. A saturated polymer of claim 21, wherein the ratio of tritium atoms to carbon atoms is at least about 1.25:1.

23. The saturated polymer of claim 21, wherein the ratio of tritium atoms to carbon atoms is at least about 1.5: 1.

24. The saturated polymer of claim 21, wherein the ratio of tritium atoms to carbon atoms is at least about 2:1.

25. The saturated polymer of claim 21, wherein the saturated polymer is tritiated poly(1-ethylethylene).

26. The saturated polymer of claim 21 or claim 25 , wherein at least one monomer unit of the saturated polymer comprises at least 5 tritium atoms.

27. A method of making a beta-voltaic cell comprising at least partially wetting at least one pore of a porous semiconductor with a liquid comprising a tritated material having a ratio of tritium atoms to carbon atoms of at least about 1:1, wherein a first portion of a junction region is disposed within said pore.

28. A method of claim 27, wherein the organic material is a polymer and the tritiated material is a tritiated polymer.

29. A method of claim 28, wherein the tritiated polymer comprises tritiated poly(1-ethylethylene).

30. A method of any of claims 27 to 29, wherein the wetting comprises melt-wetting or solution-wetting.

31. A method of any of claims 27 to 30, wherein the wetting comprises forming a film on the porous semiconductor.

32. A method of any of claims 27 to 31, wherein the porous semiconductor comprises silicon.

33. A method of any of claims 27 to 31, wherein the porous semiconductor comprises doped silicon.

34. A method of claim 32 or claim 33, wherein the porous semiconductor comprises macroporous silicon.

35. A method of any of claims 27 to 33, wherein an opening of said pore has a diameter between about 1 nm and about 500 $\mu$m.

**36.** A method of any of claims 27 to 34, wherein wetting comprises forming a layer of thickness of about 30 nm to about 50 nm on walls of at least said pore in the porous semiconductor.

**37.** A method of any of claims 27 to 36 which further comprises using a method of any of claims 1 to 20 to make the tritiated material.

**38.** An apparatus for generating electrical current from a nuclear decay process of a radioactive material, the apparatus comprising at least one porous semiconductor wafer, wherein

(a) at least one pore of said porous semiconductor wafer is at least partially coated with the radioactive material,
(b) the radioactive material comprises a tritiated material having a ratio of tritium atoms to carbon atoms of at least about 1:1, and
(c) said pore of said porous semiconductor wafer comprises a first portion of a junction region.

**39.** An apparatus of claim 38, wherein the tritiated material is a tritiated polymer.

**40.** An apparatus of claim 38 or claim 39, wherein the tritiated material is obtainable by the process of any of claims 1 to 20 or is as claimed in any of claims 21 to 26.

**41.** An apparatus of any of claims 38 to 40, wherein at least one of the porous semiconductor wafers comprises silicon.

**42.** An apparatus of claim 41, wherein at least one of the porous semiconductor wafers comprises macroporous silicon.

**43.** An apparatus of any of claims 38 to 42, wherein the first portion of the junction region is disposed at a declination angle of greater than about 55° relative to a second portion of said junction.

**44.** An apparatus of any of claims 38 to 43, wherein said pore has an aspect ratio of at least about 20:1.

**45.** An apparatus of any of claims 38 to 44 which is obtainable by a method of any of claims 27 to 37.

**Fig. 1**
PRIOR ART

Fig. 2

Fig. 3

FIG. 4

FIG.5A

EP 1 958 928 A1

FIG.5B

Fig. 6A

Fig. 6B

European Patent
Office

# EUROPEAN SEARCH REPORT

Application Number

EP 08 15 1485

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 6 418 177 B1 (STAUFFER JOHN E [US] ET AL) 9 July 2002 (2002-07-09)<br><br>* column 1, line 61 - column 2, line 3 *<br>* column 3, lines 20-43 *<br>* column 3, lines 55-67 *<br>* column 7, line 65 - column 8, line 45 *<br>* claim * | 1,5-8, 14,19, 21-24 | INV.<br>C07B59/00<br>C08F8/12<br>C08F8/04<br>C08F38/00<br>C08F38/04<br>G21H1/06 |
| X | GB 822 617 A (NAT RES COUNCIL) 28 October 1959 (1959-10-28)<br>* claims 1,5,10,11; example 17 *<br>* page 5, lines 7-12; table 1 * | 1,5,10, 11,13,14 | |
| X | MULLINS D F ET AL: "DEVELOPMENT OF ORGANIC TRITIUM LIGHT TECHNOLOGY AT ONTARIO HYDRO"<br>FUSION TECHNOLOGY, AMERICAN NUCLEAR SOCIETY. LAGRANGE PARK, ILLINOIS, US, vol. 21, no. 2 PT 02, 1 March 1992 (1992-03-01), pages 312-317, XP000271847<br>ISSN: 0748-1896<br>* page 314, left-hand column - page 316, paragraph 3 *<br>* figures 2,3 * | 1,2,6,7, 9,13,21 | |
| A,D | HELMES B ET AL: "Dendronized Linear Polymers via Click Chemistry"<br>JOURNAL OF THE AMERICAN CHEMICAL SOCIETY, US, vol. 126, no. 46, 1 January 2004 (2004-01-01), pages 15020-15021, XP002351098<br>ISSN: 0002-7863<br>scheme 2 | 1-4, 15-17,20 | |

**TECHNICAL FIELDS SEARCHED (IPC)**

C08F
C07B
C09K
G21H

-/--

| The present search report has been drawn up for all claims | | |
|---|---|---|
| Place of search | Date of completion of the search | Examiner |
| Munich | 1 July 2008 | Hollender, C |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**European Patent Office**

**EUROPEAN SEARCH REPORT**

Application Number

EP 08 15 1485

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 0 637 037 A (TEXAS INSTRUMENTS INC [US]) 1 February 1995 (1995-02-01) * claims 1,3,6-8,12,14,17,18,20,21; figures * * column 5, lines 30-45 * * column 6, lines 1-21 * ----- | 27-45 | |
| A,D | US 6 774 531 B1 (GADEKEN LARRY [US]) 10 August 2004 (2004-08-10) * claims; figures * ----- | 27-45 | |

TECHNICAL FIELDS
SEARCHED (IPC)

The present search report has been drawn up for all claims

| Place of search | Date of completion of the search | Examiner |
|---|---|---|
| Munich | 1 July 2008 | Hollender, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 15 1485

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2008

| Patent document cited in search report | | Publication date | Patent family member(s) | | Publication date |
|---|---|---|---|---|---|
| US 6418177 | B1 | 09-07-2002 | US | 5430776 A | 04-07-1995 |
| | | | US | 2002057754 A1 | 16-05-2002 |
| GB 822617 | A | 28-10-1959 | NONE | | |
| EP 0637037 | A | 01-02-1995 | US | 5396141 A | 07-03-1995 |
| US 6774531 | B1 | 10-08-2004 | US | 2004150290 A1 | 05-08-2004 |
| | | | US | 2004150229 A1 | 05-08-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050217782 A, Agostini
- US 20040053708 A, Hebert
- US 5100968 A
- US 4889660 A, Jensen
- US 4020003 A, Steinberg
- US 5124610 A, Conley
- US 6418177 B, Stauffer
- US 6479920 B, Lal

- US 6118204 A, Brown
- US 5859484 A, Mannik
- US 5606213 A, Kherani
- US 6774531 B
- US 6949865 B, Gadeken
- US 6204087 B1, Parker
- US 5529950 A, Hoenlein
- US 5997713 A, Beetz, Jr.

**Non-patent literature cited in the description**

- **MAVINKURVE et al.** High molecular weight poly(4-trimethylsilyl-1-buten-3-yne. *European Polymer Journal,* 1997, vol. 33 (5), 719-723
- **MATNISHYAN et al.** Characteristic Features of the Polymerisation of Acetylene and Its Derivatives. *Russ. Chem. Rev.,* 1983, vol. 52 (8), 751-756
- **HELMS et al.** Dendronized Linear Polymers via 'Click Chemistry. *J. Am. Chem. Soc.,* 2004, vol. 126, 15020-15021
- **TSIANG et al.** Hydrogenation of polystyrene-b-polybutadiene-b-polystyrene block copolymers using a metallocene/n-butyllithium catalyst: the role of n-butyllithium. *J. Appl. Polym. Sci.,* 1999, vol. 72 (14), 1807-1815

- **STEINHART et al.** Nanotubes a la Carte: Wetting of Porous Templates. *CHEMPHYSCHEM,* 2003, vol. 4, 1171-1176
- **SUN et al.** A Three-Dimensional Porous Silicon p-n Diode for Betavoltaics and Photovoltaics. *Adv. Mat.,* 2005, vol. 17, 1230-1233
- Deep Diffusion Doping of Macroporous Silicon. **E. V. ASTROVA et al.** A. F. Ioffe Physico-Technical Institute. Russian Academy of Sciences, December 1999